# EUROPEAN PATENT APPLICATION

(11) **EP 4 026 421 A1**
(43) Date of publication of application: **13.07.2022**
(21) Application number: 21217989.9
(22) Date of filing: 28.12.2021
(51) Int. Cl.: A01G 18/00, A01G 18/60, A01G 18/69

(54) **GREENHOUSE AND INDOOR CULTIVATION METHOD FOR STROPHARIA STROPHARIA**

(30) Priority: 06.01.2021 CN 202110010708
(71) Applicant: Changzhou Yuanzhida Business Co., Ltd., 213000 Changzhou City Jiangsu (CN)
(72) Inventor: Pei, Zhimin, Changzhou City, 213000 (CN)
(74) Representative: Ulrich, Thomas Franz

(57) **Abstract**

The present disclosure discloses a greenhouse and indoor cultivation method of Stropharia stropharia. The greenhouse and indoor cultivation method of Stropharia stropharia comprises the following steps: planting environment; ridged bottom reinforcement; mixing soil material; piling up material and fermentation; interval mixing; inoculating auxiliary materials; management of germination; picking mushroom on time. The production method of the present disclosure has the beneficial effects of preventing the accumulation of water at the bottom of ridges and soaking the strains of Stropharia stropharia to bad, watering the mushrooms more even, to prevent uneven production due to over water in some places and less water in some places. Use a steel fork to move the fungus mixed soil of the material pile in step 4 from top to bottom, churn and shake to the other side of the site, and piles up the material layer by layer, pile up materials in layers while watering and shaking depending on whether it is dry or wet. Turn over the material pile is every 2 to 3 days, and carry out 2 to 3 times of turning over, which is conducive to the even and full fermentation of the soil material. Meanwhile, employ indoor rack cultivation is to make full use of space and increase the amount of cultivation.

## Description

### TECHNICAL FIELD

The present disclosure relates to a cultivation method, in particular to a greenhouse and indoor cultivation method of Stropharia stropharia, belonging to the technical field of mushroom cultivation application.

### BACKGROUND ART

Stropharia stropharia, also known as Stropharia rugosa, wine-red stropharia, Stropharia fragrans, Pseudostrophus fasciatus, belongs to Basidiomycotina, Layer Fungi, Agaricus, Stropharia Strophariaceae, Stropharia genus, sporophore are medium to large, pileus are flat hemispherical to flat, brown to grayish brown or rusty brown, smooth or ciliated scales, shiny on the surface when dry, and the edges of the pileus are initially curled and attached to the fragments of the mushroom.

In the process of cultivation of Stropharia stropharia, the unreasonable distribution between ridges and ridges will cause inconvenient irrigation and drainage. Meanwhile, excessive accumulation of water at the bottom of the ridge will cause damage to the mushroom of Stropharia stropharia. In indoor cultivation, Stropharia stropharia may be badly soaked. At the same time, in terms of watering, some places are over watered, and some places are less watered, uneven production affects the yield. Therefore, in view of the above-mentioned problems, a greenhouse and indoor cultivation method of Stropharia stropharia is proposed.

### SUMMARY

The purpose of the present disclosure is to provide a greenhouse and indoor cultivation method of Stropharia stropharia in order to solve the above-mentioned problems.

The present disclosure achieves the above-mentioned objects through the following technical solutions of a greenhouse and indoor cultivation method for Stropharia stropharia. The greenhouse and indoor cultivation method for Stropharia stropharia comprises the following steps:
Step 1, planting environment: sorted into greenhouse and indoor planting;
Step 2, ridged bottom reinforcement: cover a bottom of the ridge bottom of layer frame with sunshade nets or mesh cloth or a sealed bottom plate, but the edges of the ridges are not enclosed or there are drainage devices at the bottom or side of the back, paved, the ditch aisle is slightly lower than the bottom of the piled ridge;
Step 3, mixing soil material: mix refined corn cob material and auxiliary materials and mix by a stirring device to obtain a soil material;
Step 4, piling up material and fermentation: pile up all the mixed soil materials into piles with layer by layer while watering, and cover them with sheeting, mushroom for more than 6 days;
Step 5, interval mixing: use steel fork tools to churn the material pile in step 4 from top to bottom to a side site, and pile the materials layer by layer, pile up materials in layers while watering and shaking depending on the uniformity of dryness and wetness, and turn over the piles every 2 to 3 days;
Step 6, inoculating auxiliary material: place a strain on the ridge surface in dibbling, and cover the mixed soil material and fertile loose soil layer by layer after completion;
Step 7, management of germination;
Step 8, picking mushrooms on time.

Preferably, the planting environment in the step 1 is greenhouse cultivation, and the greenhouse is a multi-layer greenhouse composed of with 1-2 layers of small shed.

Preferably, there are two ways of ridging on the ground floor of the greenhouse: a first type is a long ridge, longitudinal, with a walkway in the middle, and a second type is a horizontal short ridge, with a horizontal walkway and a long walkway in the greenhouse.

Preferably, the bottom surface of the ridged bottom is reinforced according to step 2.

Preferably, the planting environment in the step one is indoor planting, employing layer-frame cultivation, and placing the net plate structure in or there are drainage devices, each layer of the frame is used as a ridged bottom, and ridged bottom is reinforced according to step 2.

Preferably, the watering in the step 7, the management of germination, employs an atomized spray method and simultaneously performs uniform spraying, the specific implementation steps are as follows:
(1) Install moveable guiding rails matched at the walkway or shelf structure, install drive equipment on the moveable guiding rails, and set up in sections according to the length of the walkway and the number of layers of the layer frame;
(2) Install a water pump on the drive equipment, the length of the pipe at the water outlet port of the spray pump is the same as the width of the ridge surface, and install 3 to 4 atomizing nozzles alternately on the pipe;
(3) Connect and install the hose from water inlet port of the water pump and the water supply main pipe;
(4) Connect the water pump and the driving equipment through the intelligent control equipment, and promote the use after repeated debugging to achieve the desired effect.

Preferably, in the step 5, carrying out interval turning over in an orderly manner according to the days of germination in the step 4, turning over 2-3 times, and turning over site is exchanged between the two original piles.

The beneficial effects of the present disclosure are: the greenhouse and indoor cultivation method of Stropharia stropharia in this application are paved ridges. The first type is long ridges, longitudinally, with walkways in the middle. When drainage is needed, it is used for drainage, when watering is needed, letting the water between the two ridges for irrigation; the second type is short ridges with walkways. When drainage is needed, it is used for drainage. When watering is needed, letting the water between two ridges for irrigation. The two methods are both that the ditch aisle is slightly lower than the bottom of the piled ridge. The bottom of the layered ridge bottom is covered with sunshade nets or mesh cloth or sealed bottom plate, but the edges of the ridges are not enclosed or the bottom of the back is enclosed, or there are drainage devices on the side, and there are drainage holes on the shading net or mesh cloth, which can be used for drainage and seepage. The plate-type sealed ridge has drainage holes on the side or bottom to prevent over water in the bottom of the ridge to badly soak the Stropharia stropharia.

Use steel fork tools to churn the material pile in step 4 from top to bottom to a side site, and pile up the materials layer by layer, depending on the uniformity of the dryness and wetness, and pile up materials in layers while watering and shaking, turning over the piles every 2 to 3 days, and the turning over for 2 to 3 time is conducive to the full fermentation of the soil materials and even up and down. Meanwhile, the indoor use of layer rack cultivation makes full use of the space, increase the amount of cultivation;

Through the control connection of the water pump and the driving equipment through the intelligent control device, the effect of controlling the spraying volume and the moving spraying speed is achieved, the Stropharia stropharia is evenly watered, and prevent occurrences of uneven production due to some places are over watered, and some places are less watered.

### BRIEF DESCRIPTION OF THE DRAWINGS

In order to explain the embodiments of the present disclosure or the technical solutions in the prior art more clearly, the following will briefly introduce the drawings that be used in the description of the embodiments or the prior art. Obviously, the drawings in the following description are merely some embodiments of the present disclosure. For those of ordinary skill in the art, other drawings can be obtained based on these drawings without inventive labor.

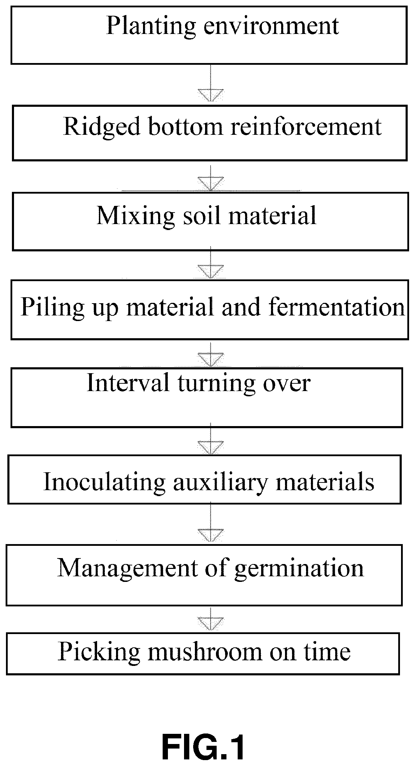

Fig. 1 is a schematic diagram of the greenhouse and indoor cultivation method of Stropharia stropharia of the present disclosure.

### DETAILED DESCRIPTION OF THE EMBODIMENTS

The technical solutions in the embodiments of the present disclosure will be described clearly and completely with reference to the accompanying drawings in the embodiments of the present disclosure. Obviously, the described embodiments are merely a part of the embodiments of the present disclosure, rather than all the embodiments. Based on the embodiments of the present disclosure, all other embodiments obtained by those of ordinary skill in the art without inventive work shall fall within the protection scope of the present disclosure.

### Example 1:

As shown in Fig. 1, a greenhouse and indoor cultivation method of Stropharia stropharia includes the following steps:
Step 1, planting environment: greenhouse planting;
Step 2, ridged bottom reinforcement: paved, the ditch aisle is slightly lower than the bottom of the piled ridge;
Step 3, mixing soil material: mix refined corn cob material and auxiliary materials and mix by a stirring device to obtain a soil material;
Step 4, piling up material and fermentation: pile up all the mixed soil materials into piles with layer by layer while watering, and cover them with sheeting, mushroom for more than 6 days;
Step 5, interval mixing: use steel fork tools to churn the material pile in step 4 from top to bottom to a side site, and pile the materials layer by layer, pile up materials in layers while watering and shaking depending on the uniformity of dryness and wetness, and turn over the piles every 2 to 3 days;
Step 6, inoculating auxiliary material: place a strain on the ridge surface in dibbling, and cover the mixed soil material and fertile loose soil layer by layer after completion;
Step 7, management of germination;
Step 8, picking mushrooms on time.

Further, the greenhouse in step 1 is a multi-layer greenhouse formed by setting 1-2 small sheds in one greenhouse.

Further, there are two ways of ridging the site for the greenhouse planting: the first is a long ridge with a vertical ridge with a walkway in the middle, and the second is a horizontal short ridge with a horizontal walkway and a long walkway in the greenhouse.

The benefits of this cultivation method are: ridges, the first type are long ridge, longitudinally with a walkway in the middle. When drainage is needed, it is used for drainage; when watering is needed, letting the water between the two ridges for irrigation. The second type is horizontal short ridge, with horizontal walkways and long walkways in the shed. When drainage is needed, it can be used for drainage, and when watering is needed, it can be used for drainage and seepage. The walkway separation helps prevent cross-infection of miscellaneous bacteria, and the walkway is slightly lower than the bottom of the pile to prevent water accumulation at the bottom of the material.

### Example 2:

As shown in Fig. 1, a greenhouse and indoor cultivation method of Stropharia stropharia includes the following steps:
Step 1, planting environment: indoor planting;
Step 2, ridged bottom reinforcement: cover a bottom of the ridge bottom of layer frame with sunshade nets or mesh cloth or a sealed bottom plate, but the edges of the ridges are not enclosed or there are drainage devices at the bottom or side of the back;
Step 3, mixing soil material: mix refined corn cob material and auxiliary materials and mix by a stirring device to obtain a soil material;
Step 4, piling up material and fermentation: pile up all the mixed soil materials into piles with layer by layer while watering, and cover them with sheeting, mushroom for more than 6 days;
Step 5, interval mixing: use steel fork tools to churn the material pile in step 4 from top to bottom to a side site, and pile the materials layer by layer, pile up materials in layers while watering and shaking depending on the uniformity of dryness and wetness, and turn over the piles every 2 to 3 days;
Step 6, inoculating auxiliary material: place a strain on the ridge surface in dibbling, and cover the mixed soil material and fertile loose soil layer by layer after completion;
Step 7, management of germination;
Step 8, picking mushrooms on time.

Further, the indoor planting in the step 1 employs the layer frame cultivation, the net plate structure etc. are placed at each layer of the layer frame as the bottom of the ridge and the bottom of the ridge is reinforced according to step 2.

Further, in the step 5, the interval turning over needs to be carried out 2 to 3 times in an orderly manner according to the fermentation days in the step 4, and turning over site is exchanged between the two original piles.

The advantage of this cultivation method is that the refined mixed soil material from step 4 is churned from top to bottom with steel fork tools to the other side of the site, and the material is piled layer by layer, pile up materials in layers while watering and shaking depending on the degree of uniformity of dryness and wetness. The material pile is turned over every 2 to 3 days, and carrying out 2 to 3 times turning over is conducive to the full fermentation of the soil material. Meanwhile, the indoor use of layered cultivation, which makes full use of space, and increase cultivation quantity.

### Example 3:

As shown in Fig. 1, a greenhouse and indoor cultivation method of Stropharia stropharia includes the following steps:
Step 1, planting environment: indoor planting;
Step 2, ridged bottom reinforcement: cover a bottom of the ridge bottom of layer frame with sunshade nets or mesh cloth or a sealed bottom plate, but the edges of the ridges are not enclosed or there are drainage devices at the bottom or side of the back;
Step 3, mixing soil material: mix refined corn cob material and auxiliary materials and mix by a stirring device to obtain a soil material;
Step 4, piling up material and fermentation: pile up all the mixed soil materials into piles with layer by layer while watering, and cover them with sheeting, mushroom for more than 6 days;
Step 5, interval mixing: use steel fork tools to churn the material pile in step 4 from top to bottom to a side site, and pile the materials layer by layer, pile up materials in layers while watering and shaking depending on the uniformity of dryness and wetness, and turn over the piles every 2 to 3 days;
Step 6, inoculating auxiliary material: place a strain on the ridge surface in dibbling, and cover the mixed soil material and fertile loose soil layer by layer after completion;
Step 7, management of germination;
Step 8, picking mushrooms on time.

Further, the watering in the management of the growth and fruiting of the step 7 employs a guiding rail moveable spray method for uniform spray watering, and the specific implementation steps are as follows:
(1) Install moveable guiding rails matched at the walkway or shelf structure, install drive equipment on the moveable guiding rails, and set up in sections according to the length of the walkway and the number of layers of the layer frame;
(2) Install a water pump on the drive equipment, the length of the pipe at the water outlet port of the spray pump is the same as the width of the ridge surface, and install 3 to 4 atomizing nozzles alternately on the pipe;
(3) Connect and install the hose from water inlet port of the water pump and the water supply main pipe;
(4) Connect the water pump and the driving equipment through the intelligent control equipment, and promote the use after repeated debugging to achieve the desired effect.

This cultivation method is beneficial in that it achieves the effect of controlling the spray volume and moving spray speed by connecting the water pump and the driving equipment through the intelligent control device, and realizes the function of more uniform watering of Stropharia stropharia, preventing that some places is over watered and some places less water, resulting in uneven production.

For those skilled in the art, it is obvious that the present disclosure is not limited to the details of the foregoing exemplary embodiments, and the present disclosure can be implemented in other specific forms without departing from the spirit or basic characteristics of the present disclosure. Therefore, from any point of view, the embodiments should be regarded as exemplary and non-restrictive. The scope of the present disclosure is defined by the appended claims rather than the above description, and therefore it is intended to fall within the claims. All changes within the meaning and scope of the equivalent elements of are included in the present disclosure. Any reference signs in the claims should not be regarded as limiting the claims involved.

In addition, it should be understood that although this specification is described in accordance with the embodiments, each embodiment not only includes an independent technical solution. This narration in the specification is only for clarity, and those skilled in the art should regard the specification as a whole technical solution, the various embodiments can also be appropriately combined to form other embodiments that can be understood by those skilled in the art.

## Claims

1. A greenhouse and indoor cultivation method for Stropharia stropharia, wherein the greenhouse and indoor cultivation method for Stropharia stropharia comprises the following steps:
Step 1, planting environment: sorted into greenhouse and indoor planting;
Step 2, ridged bottom reinforcement: cover a bottom of the ridge bottom of layer frame with sunshade nets or mesh cloth or a sealed bottom plate, but the edges of the ridges are not enclosed or there are drainage devices at the bottom or side of the back, paved, the ditch aisle is slightly lower than the bottom of the piled ridge;
Step 3, mixing soil material: mix refined corn cob material and auxiliary materials and mix by a stirring device to obtain a soil material;
Step 4, piling up material and fermentation: pile up all the mixed soil materials into piles with layer by layer while watering, and cover them with sheeting, mushroom for more than 6 days;
Step 5, interval mixing: use steel fork tools to churn the material pile in step 4 from top to bottom to a side site, and pile the materials layer by layer, pile up materials in layers while watering and shaking depending on the uniformity of dryness and wetness, and turn over the piles every 2 to 3 days;
Step 6, inoculating auxiliary material: place a strain on the ridge surface in dibbling, and cover the mixed soil material and fertile loose soil layer by layer after completion;
Step 7, management of germination;
Step 8, picking mushroom on time.

2. The greenhouse and indoor cultivation method for Stropharia stropharia according to claim 1, wherein: the planting environment in the step 1 is greenhouse cultivation, and the greenhouse is a multi-layer greenhouse composed of with 1-2 layers of small shed.

3. The greenhouse and indoor cultivation method of Stropharia stropharia according to claim 2, wherein: there are two ways of ridging on the ground floor of the greenhouse: a first type is a long ridge, longitudinal, with a walkway in the middle, and a second type is a horizontal short ridge, with a horizontal walkway and a long walkway in the greenhouse.

4. The greenhouse and indoor cultivation method of Stropharia stropharia according to claim 2, wherein, the bottom surface of the ridged bottom is reinforced according to step 2.

5. The greenhouse and indoor cultivation method of Stropharia stropharia according to claim 1, wherein: the planting environment in the step one is indoor planting, employing layer-frame cultivation, and placing the net plate structure in or there are drainage devices, each layer of the frame is used as a ridged bottom, and ridged bottom is reinforced according to step 2.

6. The greenhouse and indoor cultivation method of Stropharia stropharia according to claim 1, wherein: the watering in the step 7, the management of germination, employs an atomized spray method and simultaneously performs uniform spraying, the specific implementation steps are as follows:
(1) Install moveable guiding rails matched at the walkway or shelf structure, install drive equipment on the moveable guiding rails, and set up in sections according to the length of the walkway and the number of layers of the layer frame;
(2) Install a water pump on the drive equipment, the length of the pipe at the water outlet port of the spray pump is the same as the width of the ridge surface, and install 3 to 4 atomizing nozzles alternately on the pipe;
(3) Connect and install the hose from water inlet port of the water pump and the water supply main pipe;
(4) Connect the water pump and the driving equipment through the intelligent control equipment, and promote the use after repeated debugging to achieve the desired effect.

7. The greenhouse and indoor cultivation method of Stropharia stropharia according to claim 1, wherein: in the step 5, carrying out interval turning over in an orderly manner according to the days of germination in the step 4, turning over 2-3 times, and turning over site is exchanged between the two original piles.
